# EUROPEAN PATENT SPECIFICATION

(11) **EP 2 179 665 B1**
(45) Date of publication and mention of the grant of the patent: **09.11.2016**
(21) Application number: 09171670.4
(22) Date of filing: 29.09.2009
(51) Int. Cl.: A23N 12/08

(54) **Equipment for roasting coffee beans and edible seeds in general**
Röstmaschine für Kaffeebohnen und dergelichen
Appareil pour la torréfaction des grains de café ou autres produits grenus

(30) Priority: 24.10.2008 IT PD20080306
(43) Date of publication of application: 28.04.2010
(73) Proprietor: BAR SYSTEM EUROPE Srl, 35129 Padova (IT)
(72) Inventor: Sommacal, Paolo Alessandro, 35129, PADOVA (IT)
(74) Representative: Vinci, Marcello

(56) References cited:
- WO-A-97/16985
- CH-A- 252 523
- DE-U1- 20 313 389
- GB-A- 479 181
- US-A- 3 608 202
- US-A1- 2004 074 400
- US-B1- 6 382 087

## Description

The present patent concerns the equipment for roasting edible seeds like coffee beans, nuts, peanuts and the like, and in particular it concerns a new piece of equipment for domestic use suitable for roasting edible seeds, in particular coffee beans.

A prior art coffee beans roasting device is known from CH-A-252 523.

It is known that some types of vegetable seeds must be subjected to suitable preliminary treatments intended to make them edible or usable for cooking purposes.

Coffee, for example, is harvested in green beans that first of all must undergo the roasting treatment, during which they are dried at high temperature by means of a flow of hot air, intended to cook them and at the same time remove the skin that covers them.

The roasted coffee beans are then suitably ground and reduced to powder, so that they can be used for preparing the known coffee-based products and beverages.

Industrial machines for roasting and grinding coffee are known, which are an integral part of coffee roasting systems and feature a very high hourly output.

In particular, said industrial machines for roasting coffee generally comprise a substantially cylindrical fixed case, housing a drum that rotates around a horizontal axis and is provided with an opening for introducing the product to be roasted and a further opening for unloading the roasted product.

In the known equipment, the roasting process is carried out by means of a flow of hot air that passes through the drum from the bottom towards the top, thus exploiting the natural motion of hot air, or is forced to pass through said drum in axial direction or from the top towards the bottom.

Other machines for roasting coffee used in bars and restaurants are also known, which have reduced dimensions compared to the industrial machines and have a capacity of at least 2-5 kg, and whose operation is substantially similar to that of the industrial machines.

Retail stores sell packages of roasted and grounded coffee and also packages of whole roasted coffee beans.

The latter type of product obviously costs less than the former, but the final consumer has to grind the coffee before consumption.

For this purpose, home coffee grinders are known and widely used, consisting of small manual or automatic machines that, by means of blades, provide for grinding the coffee beans in the size desired by the consumer, also according to the intended use of the product.

On the other hand, the retail sale of green coffee beans, that is, not roasted beans, is not common, since the roasting equipment currently known is not suitable for domestic use, that is, for processing small quantities of coffee beans.

In fact, if the quantity of coffee to be treated is much below the capacity of the equipment, energy consumption is too high compared to the hourly output and the quality of the roasting process suffers, too, since the beans run the risk of being roasted excessively and becoming unusable.

Therefore, individual consumers cannot buy unroasted coffee beans, which would allow them to save more than 80% on the cost of the raw material, since they don't have suitable equipment for roasting the beans.

To overcome the above drawback, a new type of domestic equipment has been studied and constructed for roasting coffee beans and semi-edible seeds in general.

The main object of the present invention is to provide a piece of equipment suitable for domestic use, that is, capable of roasting small quantities of coffee, for example in the order of 0,5-2 kg of coffee at a time, at the same time reducing energy costs and guaranteeing the quality of the roasting process.

Another important object of the present invention is to provide a piece of equipment that can be used independently of any other previous or successive production process.

A further object of the present invention is to limit the spreading of bad smells or dusts to the outside, which can be achieved by filtering the hot air that results from the roasting process and is rich in humidity and dust, and also by providing for the collection of roasting residues, that is, of the carbonized or burnt fragments of roasted bean skins.

These and other direct and complementary objects have been achieved by the new type of domestic equipment for roasting coffee beans or semi-edible beans in general, as set out in claim 1.

The new equipment also comprises at least one air suction fan, suited to convey an air flow into said containing body through a delivery duct, at least one resistance or heater suited to heat said air flow before it is introduced into said containing body, and one or more chambers and/or devices for discharging and/or filtering the air the flows out of said containing body, suited to filter the flow and hold the dust.

In the preferred embodiment of the invention illustrated herein, said containing body is preferably a hollow cylindrical body, arranged with substantially horizontal or slightly inclined longitudinal axis, and wherein said duct for conveying the hot air flow is connected to the cylindrical side wall of said hollow cylinder in a preferably lateral position, so that the air flow enters the cylinder in a substantially horizontal direction and orthogonal to the longitudinal axis of the cylinder, and is successively distributed inside the cylinder itself.

Furthermore, according to the invention, on the side wall of the cylinder there is/are one or more holes or openings for letting the air out, preferably arranged in a position substantially opposite the inlet of said delivery duct and/or on the lower part of the cylinder itself, and wherein said holes or openings place the inside of said cylinder in communication with the inside of said discharging and filtering chamber.

Thus, said hot air flow passes through said cylinder substantially crosswise to the longitudinal axis of the cylinder, drying and roasting the product contained therein, and then the air flows out through said holes, enters said discharge chamber and/or filtering devices and finally reaches the external environment.

According to a possible alternative solution, the new equipment may also comprise a hollow cylindrical drum, housed in said containing cylinder and substantially coaxial with it, said drum being suited to contain the coffee beans to be roasted and rotating in relation to said containing cylinder, integrally or not with said rotary stirring arms or blades.

The characteristics of the invention will be highlighted in greater detail in the following description, with reference to the drawings attached as nonlimiting examples.

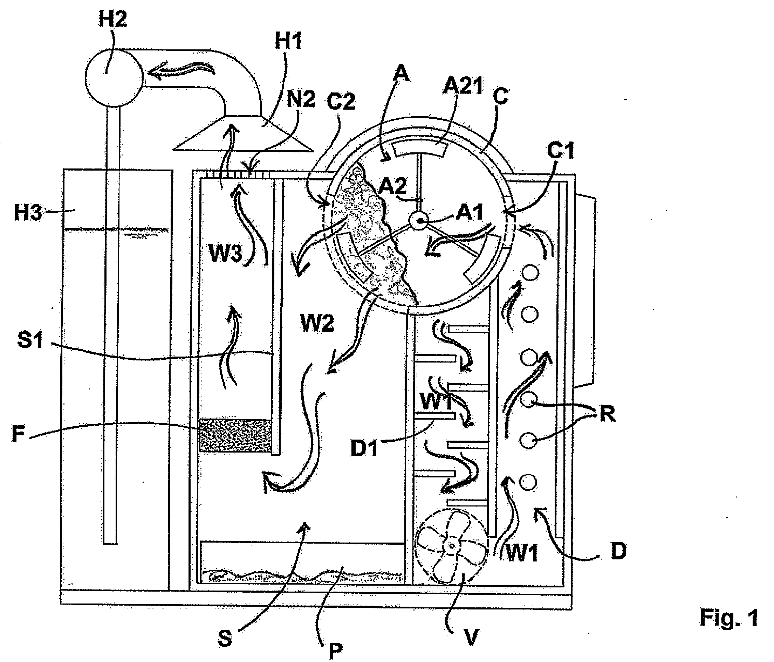

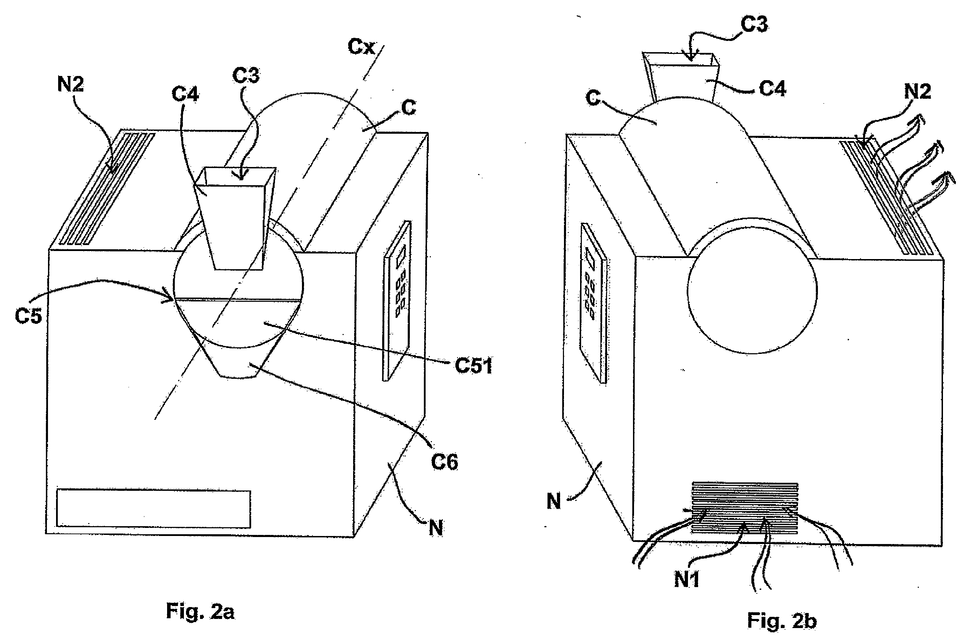

Figure 1 shows a schematic side view of the new roasting equipment, while Figures 2a and 2b show two 3D views, respectively front and back, of the case (N) of the new roasting equipment.

The new roasting equipment for domestic use suitable for roasting edible seeds, in particular coffee, comprises a case (N) housing at least one hollow cylinder (C) containing the product to be roasted, arranged with substantially horizontal longitudinal axis (Cx) and provided with at least one opening (C3) with funnel or feed duct (C4) for introducing the product to be roasted and at least one further opening (C5) for discharging the roasted product.

The new equipment also comprises at least one air suction fan (V) for sucking the air from the outside of said case (N) through suitable intake vents (N1).

Said fan (V) conveys an air flow (W1) into said cylinder (C) through at least one delivery duct (D), and at least one resistance or heater (R) of said air flow (W1) before it is introduced in said cylinder (C).

Said delivery duct (D) has preferably the shape of a U, or double U, and comprises a coil section, that is, a section with partitions (D1) arranged crosswise to the direction of said flow (W1), in order to reduce the speed of the air flow (W1) and thus optimize the heat exchange efficiency, at the same time reducing energy costs.

Said fan (V) is preferably arranged in the rear part of the case (N) of the equipment, where the intake vents (N1) are located.

Said resistance or heater (R) is preferably arranged within said delivery duct (D) crossed by the air flow (W1) that enters said cylinder (C).

In particular, the inlet (C1) of said delivery duct (D) suited to convey the hot air flow (W) into said cylinder is positioned on the side cylindrical wall of said cylinder, in a lateral position, so that the air flow (W1) enters the cylinder (C) in a substantially horizontal direction and orthogonal to the longitudinal axis (Cx) of the cylinder (C), and successively is distributed inside the cylinder itself.

The side wall of said cylinder (C), furthermore, is provided with one or more holes or openings (C2) arranged in a position substantially opposite said inlet (C1) of said delivery duct (D) and/or on the lower part of the cylinder (C), wherein said holes or openings (C2) place the inside of said cylinder (C) in communication with at least one discharge, cooling and filtering chamber (S) arranged immediately downstream.

Said hot air flow (W1) passes through said cylinder (C) substantially crosswise to the longitudinal axis (Cx) of the cylinder (C), drying and roasting the product contained therein, and then the air flows out through said holes (C2), filled with humidity and dust (W2), and enters said discharge chamber (S).

Said chamber (S) comprises one or more baffle elements (S1) suited to convey said humid and hot air flow (W2) along a trajectory, for example U or coil-shaped, that favours the abatement of the dust and its accumulation into a removable tank (P), and then through at least one filtering element (F) suited to hold impurities and bad smells.

The flow of at least partially filtered air (W3) then ends into the external environment passing through outlet vents (N2) located on said case (N).

According to the invention, said flow (W3) exiting from said case (N) can be further filtered, for example by means of an extraction hood (H1) connected to a fan (H2) that conveys said flow (W3) into a further filtering device (H3), for example a water filter.

Said hollow cylinder (C) is fixed and houses at least one device (A) for stirring the product contained in said cylinder (C), said device (A) comprising a rotary shaft (A1) arranged in a position preferably coaxial to said cylinder (C) and integral with one or more radial arms (A2) provided with product mixing and stirring blades (A21).

In particular, said shaft (A1) and said arms (A2) rotate in such a direction as to stir the product during roasting and at the same time allow the accumulation of the product on the cylinder wall that is opposite the inlet (C1) of said delivery duct for the introduction of the air flow (W) into the cylinder (C).

In this way the exchange surface between the coffee beans and the air flow is maximized.

Said blades (A2), furthermore, are preferably partially oriented towards said discharge opening (C5), in such a way as to mix and at the same time move the roasted product towards said discharge opening (C5), at the level of which there are a door (C51) and a chute (C6).

According to the invention, the new equipment may also comprise a hollow cylindrical drum, not represented in the figure, coaxially housed in said containing cylinder (C), said drum being suited to contain the coffee beans to be roasted and rotating in relation to said containing cylinder (C), integrally or not with said rotary stirring arms (A2).

Therefore, with reference to the above description and the attached drawings, the following claims are expressed.

## Claims

1. Equipment for roasting edible seeds like coffee beans and similar products, comprising at least one body (C) for containing the product to be roasted, with at least one feed opening (C3) for introducing the product to be treated, and at least one further discharge opening (C5) for unloading the roasted product, at least one air suction fan (V) suited to convey an air flow (W1) in said containing body (C) through at least one delivery duct (D) and at least one resistance or heater (R) suited to heat said air flow (W1) before it is introduced in said containing body (C), **characterized in that** said containing body (C) is fixed and houses at least one device (A) for moving the product, said device (A) in turn comprising at least one rotary shaft (A1) provided with one or more substantially radial arms (A2) or blades (A21) suited to stir the product during roasting and wherein said containing body (C) is substantially cylindrical in shape, with substantially horizontal longitudinal axis (Cx), and is provided with at least one inlet hole (C1) for the introduction of the hot air flow (W1), in lateral position on the cylindrical surface, and with one or more further outlet holes (C2) for the outflow of the air (W2), located on the cylindrical surface in the opposite lateral position and/or on the lower portion of said cylindrical surface, so that said air flows into said containing body (C) in a substantially horizontal direction and orthogonally to the longitudinal axis (Cx) and flows out in a substantially horizontal direction and/or oriented downwards.

2. Roasting equipment according to claim 1, **characterized in that** it comprises also a hollow cylindrical drum, housed in a substantially coaxial position in said containing body (C), said drum being suited to contain the coffee beans to be roasted and rotating in relation to said containing body (C), wherein during rotation said drum can be integral or not with said rotary stirring arms (A2) or blades (A21).

3. Roasting equipment according to claims 1 or 2 , **characterized in that** said shaft (A1) is positioned coaxially in relation to said containing body (C) and rotates in such a direction as to cause the product to accumulate on the portion of the cylindrical wall that is opposite said air inlet hole (C1).

4. Roasting equipment according to claims 1, 2 or 3, **characterized in that** said blades (A2) are arranged according to a substantially radial configuration and are directed towards said discharge opening (C5) in order to move the roasted product towards said discharge opening (C5).

5. Roasting equipment according to the preceding claims, **characterized in that** it comprises at least one duct or chamber (S) into which said air (W2) flowing out of said containing body (C) through said holes or openings (C2) is conveyed, and at least one element (F) for filtering said air (W2) before it flows out of the equipment.

6. Roasting equipment according to the preceding claims, **characterized in that** said duct or chamber (S) comprises one or more deflectors (S1) that convey said outflowing air (W2) along a coil or U-shaped trajectory, in order to cause the dust transported by the air flow itself to fall down, and/or at least one underlying removable container (P) for collecting said dust.

7. Roasting equipment according to the preceding claims, **characterized in that** it comprises at least one hood or device (H1, H2) for sucking the air (W3) flowing out of said equipment, suited to convey said air flow (W3) into at least one further filtering device (H3).

8. Roasting equipment according to claim 7, **characterized in that** said filtering device (H3) is a water filter.

9. Roasting equipment according to any of the preceding claims, **characterized in that** said feed opening (C3) of said containing body (C) comprises at least one funnel or feed duct (C4), and **in that** said discharge opening (C5) of said containing body (C) comprises at least one closing panel (C51) and at least one discharge chute (C6).

## Patentansprüche

1. Ausrüstung zum Rösten essbarer Samen wie Kaffeebohnen und ähnlicher Produkte, wenigstens einen Körper (C) zur Aufnahme des Röstguts mit wenigstens einer Einfüllöffnung (C3) zum Einfüllen des zu behandelnden Produkts und wenigstens einer weiteren Auslauföffnung (C5) zum Entladen des gerösteten Produkts umfassend, sowie wenigstens einen Luftansauglüfter (V) umfassend, der dazu geeignet ist, in dem besagten Behälterkörper (C) einen Luftstrom (W1) durch wenigstens eine Ausgabeleitung (D) zu leiten und wenigstens einen Widerstand oder Heizelement (R), der/das dazu geeignet ist, den besagten Luftstrom (W1) vor seiner Einleitung in den besagten Behälterkörper (C) zu erhitzen, **dadurch gekennzeichnet, dass** der besagte Behälterkörper (C) feststehend ist und wenigstens eine Vorrichtung (A) zur Bewegung des Produkt enthält, wobei die besagte Vorrichtung (A) ihrerseits wenigstens eine drehende Welle (A1) mit einem oder mehreren, im Wesentlichen radialen Armen (A2) oder Schaufeln (A21) umfasst, die dazu geeignet sind, das Produkt während des Röstens umzurühren, und wobei der besagte Behälterkörper (C) im Wesentlichen zylindrisch geformt ist, mit einer im Wesentlichen waagerechten Längsachse (Cx), und mit wenigstens einer Einlassöffnung (C1) zur Einleitung des Heißluftstroms (W1) in einer seitlichen Position an der zylindrischen Oberfläche versehen ist, sowie mit einer oder mehreren, weiteren Auslassöffnungen (C2) zum Ausströmen der Luft (W2) an der zylindrischen Oberfläche in der entgegengesetzten, seitlichen Position und/oder am unteren Abschnitt der besagten zylindrischen Oberfläche, so dass die besagte Luft in einer im Wesentlichen waagerechten Richtung und orthogonal zu der Längsachse (Cx) in den besagten Behälterkörper (C) strömt und in einer im Wesentlichen waagerechten Richtung und/oder nach unten gerichtet ausströmt.

2. Röstausrüstung gemäß Patentanspruch 1, **dadurch gekennzeichnet, dass** sie auch eine hohle, zylindrische Trommel umfasst, die in einer im Wesentlichen koaxialen Position in dem besagten Behälterkörper (C) positioniert ist, wobei die besagte Trommel geeignet ist, die zu röstenden Kaffeebohnen zu enthalten und sich bezüglich des besagten Behälterkörpers (C) dreht, wobei die besagte Trommel während der Drehung mit den besagten, drehenden Rührarmen (A2) oder Schaufeln (A21) eine Einheit bilden kann oder nicht.

3. Röstausrüstung gemäß den Patentansprüchen 1 oder 2, **dadurch gekennzeichnet, dass** die besagte Welle (A1) koaxial zu dem besagten Behälterkörper (C) positioniert ist und sich in einer solchen Richtung dreht, dass sich das Produkt in dem Abschnitt der zylindrischen Wand ansammelt, welcher der besagten Lufteinlassöffnung (C1) gegenüberliegt.

4. Röstausrüstung gemäß den Patentansprüchen 1, 2 oder 3, **dadurch gekennzeichnet, dass** die besagten Schaufeln (A2) gemäß einer im Wesentlichen radialen Konfiguration angeordnet und zu der besagten Auslauföffnung (C5) gerichtet sind, um das geröstete Produkt zu der besagten Auslauföffnung (C5) hin zu bewegen.

5. Röstausrüstung gemäß vorstehenden Patentansprüchen, **dadurch gekennzeichnet, dass** sie wenigstens eine Leitung oder Kammer (S) umfasst, in die die besagte, durch die besagten Löcher oder Öffnungen (C2) aus dem besagten Behälterkörper (C) ausströmende Luft (W2) geleitet wird, und wenigstens ein Element (F) zum Filtern der besagten Luft (W2), bevor sie aus der Ausrüstung ausströmt.

6. Röstausrüstung gemäß vorstehenden Patentansprüchen, **dadurch gekennzeichnet, dass** die besagte Leitung oder Kammer (S) einen oder mehrere Deflektoren (S1) umfasst, die die besagte, ausströmende Luft (W2) entlang einer Rohrschlange oder U-förmigen Strecke leiten, um das durch den Luftstrom selbst beförderte Pulver herabfallen zu lassen und/oder wenigstens einen darunter befindlichen, herausnehmbaren Behälter (P) zur Aufnahme des besagten Pulvers.

7. Röstausrüstung gemäß vorstehenden Patentansprüchen, **dadurch gekennzeichnet, dass** sie wenigstens eine Haube oder Vorrichtung (H1, H2) umfasst, um die aus der besagten Ausrüstung ausströmende Luft (W3) anzusaugen, die dazu geeignet ist, den besagten Luftstrom (W3) in wenigstens eine weitere Filtervorrichtung (H3) zu leiten.

8. Röstausrüstung gemäß Patentanspruch 7, **dadurch gekennzeichnet, dass** die besagte Filtervorrichtung (H3) ein Wasserfilter ist.

9. Röstausrüstung gemäß eines jeden der vorstehenden Patentansprüche, **dadurch gekennzeichnet, dass** die besagte Einfüllöffnung (C3) des besagten Behälterkörpers (C) wenigstens einen Trichter oder eine Einfüllleitung (C4) umfasst, und dadurch, dass die besagte Auslauföffnung (C5) des besagten Behälterkörpers (C) wenigstens eine Verschlussplatte (C51) und wenigstens eine Entladerutsche (C6) umfasst.

## Revendications

1. Appareil pour la torréfaction de graines comestibles comme des grains de café et des produits similaires, comprenant au moins un corps (C) pour le confinement du produit à torréfier, avec au moins une ouverture d'alimentation (C3), pour l'introduction du produit à traiter, et au moins une ouverture de déchargement supplémentaire (C5), pour le déchargement du produit torréfié, au moins un ventilateur d'aspiration de l'air (V) apte à acheminer un flux d'air (W1) dans ledit corps de confinement (C) à travers au moins un conduit de refoulement (D) et au moins une résistance ou un réchauffeur (R) apte à chauffer ledit flux d'air (W1) avant son introduction dans ledit corps de confinement (C), **caractérisé en ce que** ledit corps de confinement (C) est fixe et loge au moins un dispositif (A) pour déplacer le produit, ledit dispositif (A) comprenant à son tour au moins un arbre rotatif (A1) doté d'un ou plusieurs bras (A2) ou lames (A21) essentiellement radiaux indiqués pour remuer le produit durant la torréfaction et où ledit corps de confinement (C) présente une forme essentiellement cylindrique, avec un axe longitudinal essentiellement horizontal (Cx), et est doté d'au moins un orifice d'admission (C1) pour l'introduction du flux d'air chaud (W1), en position latérale sur la surface cylindrique, et d'un ou plusieurs orifices de sortie supplémentaires (C2) pour l'évacuation de l'air (W2), disposés sur la surface cylindrique dans la position latérale opposée et/ou sur la portion inférieure de ladite surface cylindrique, de façon à ce que cet air entre dans ledit corps de confinement (C) dans une direction essentiellement horizontale et de manière perpendiculaire à l'axe longitudinal (Cx) et sort dans une direction essentiellement horizontale et/ou orientée vers le bas.

2. Appareil pour la torréfaction selon la revendication 1, **caractérisé en ce qu**'il comprend également un tambour cylindrique creux, logé dans une position essentiellement coaxiale dans ledit corps de confinement (C), ledit tambour étant apte à contenir les grains de café à torréfier et pivotant par rapport audit corps de confinement (C), où durant la rotation ledit tambour peut être solidaire ou non desdits bras (A2) ou lames (A21) remuants et rotatifs.

3. Appareil pour la torréfaction selon la revendication 1 ou 2, **caractérisé en ce que** ledit arbre (A1) est positionné de manière coaxiale audit corps de confinement (C) et tourne dans ladite direction de manière à ce que le produit s'accumule sur la portion de la paroi cylindrique qui est opposée audit orifice d'entrée de l'air (C1).

4. Appareil pour le torréfaction selon les revendications 1, 2 ou 3, **caractérisé en ce que** lesdites lames (A2) sont positionnées selon une configuration essentiellement radiale et sont orientées vers ladite ouverture de déchargement (C5) de façon à déplacer le produit torréfié vers ladite ouverture de déchargement (C5).

5. Appareil pour la torréfaction selon les revendications précédentes, **caractérisé en ce qu'**il comprend au moins un conduit ou chambre (S) où ledit flux d'air (W2) est acheminé en sortant dudit corps de confinement (C) à travers lesdits orifices ou ouvertures (C2), et au moins un élément (F) pour la filtration dudit air (W2) avant de sa sortie de l'appareil.

6. Appareil pour la torréfaction selon les revendications précédentes, **caractérisé en ce que** ledit conduit ou chambre (S) comprend un ou plusieurs déflecteurs (S1) qui acheminent ledit flux d'air (W2) s'écoulant le long d'une trajectoire en serpentin ou en forme de U de façon à causer la chute de la poussière transportée par le flux d'air même, et/ou au moins un récipient amovible sous-jacent (P) pour recueillir ladite poussière.

7. Appareil pour la torréfaction selon les revendications précédentes, **caractérisé en ce qu**'il comprend au moins une hotte ou dispositif d'aspiration (H1, H2) du flux d'air (W3) sortant dudit appareil, apte à acheminer ledit flux d'air (W3) en au moins un dispositif de filtration supplémentaire (H3).

8. Appareil pour la torréfaction selon la revendication 7, **caractérisé en ce que** ledit dispositif de filtration (H3) est un filtre à eau.

9. Appareil pour la torréfaction selon l'une quelconque des revendications précédentes, **caractérisé en ce que** ladite ouverture d'alimentation (C3) dudit corps de confinement (C) comprend au moins un entonnoir ou un conduit d'alimentation (C4), et **en ce que** ladite ouverture de déchargement (C5) dudit corps de confinement (C) comprend au moins un panneau de fermeture (C51) et au moins une goulotte d'évacuation (C6).
